# EUROPEAN PATENT APPLICATION

(11) **EP 1 308 822 A2**
(43) Date of publication of application: **07.05.2003**
(21) Application number: 02023889.5
(22) Date of filing: 24.10.2002
(51) Int. Cl.: G06F 1/00

(54) **Method and apparatus for ascertaining the status of an information system**

(30) Priority: 30.10.2001 JP 2001332377; 16.04.2002 JP 2002112913
(71) Applicant: Asgent, Inc., Tokyo 103-0016 (JP)
(72) Inventor: Sugimoto, Takahiro, c/o Asgent, Inc., Tokyo 103-0016 (JP)
(74) Representative: Leson, Thomas Johannes Alois, Dipl.-Ing.

(57) **Abstract**

To provide a method for enabling faster, accurate ascertainment of status of an information system through use of inquiries submitted to members of an organization and an approach other than the inquiries. In step S1-1, inquiries are submitted to members of an organization, and answers to the inquiries are obtained. In step S1-2, the status of the information system is ascertained on the basis of the answers. In step S1-3, the information system is examined through use of an inspection tool through use of a network analyzer, thereby ascertaining the status of the information system. In step S1-4, the status of the information system ascertained in step S1-2 and the status of the information system ascertained in step S1-3 are merged. In step S1-5, on the basis of the thus-merged status of the information system, a security policy is established. The status of the information system is ascertained by utilization of inquiries and the result of inspection performed by use of the tool. Hence, the status of the information system can be ascertained accurately.

## Description

### Background of the Invention

### Field of the Invention

The invention relates to a method of ascertaining the status of an information system. The invention also relates to a method of establishing a security policy on the basis of an ascertained status of an information system. Further, the invention relates to a system and program to be used for ascertaining a status.

### Related Art

The applicant has already proposed a system and method for establishing a security policy by means of ascertaining a status from answers to inquiries submitted to members of an organization.

However, submission of inquiries to members of an organization may become a time-consuming and complicated operation. Further, there may arise a case where answers are not necessarily correct; human memory is often vague and has a potential to produce misunderstandings or the like.

Even when a computer system constituting an information system is inspected, difficulty is encountered in ascertaining human arrangements. For instance, information about a manager of a certain server or information about a post having an authority to rewrite contents of certain information may be difficult to ascertain.

Demand exists for the ability to ascertain the status of the information system of an organization by means of an approach other than a method of submitting inquiries to members of the organization, and to merge the thus-obtained status with the status obtained through inquiries.

The invention has been conceived in view of such a problem and aims at providing a method of enabling more accurate and immediate ascertainment of the status of an information system through use of inquiries to be submitted to members of an organization and an approach other than inquiries.

### Summary of the Invention

In order to solve the problem, the invention provides a method for ascertaining the status of an information system, comprising:
a first step of ascertaining a first status of an information system by submitting inquiries to members of an organization and ascertaining the status of the information system of the organization on the basis of answers to the inquiries;
a second step of ascertaining a second status of the information system by inspecting the status of the information system of the organization through use of an inspection tool of the information system and ascertaining the status of the information system on the basis of a result of the inspection; and
an integration step of merging the first information system status and the second information system status, thereby establishing the status of the information system of the organization. The integration step further comprises the steps provided below:

Specifically, the integration step comprises
a consistency inspection step of comparing the first information system status with the second information system status and separating an inconsistent matter from consistent matters;
a display step of displaying the inconsistent matter and enabling entry of a choice made by the user in connection with the inconsistent matter, thereby obtaining a result selected by the user; and
a synthesis step of merging the consistent matters and the result of selection made by the user.

By means of such a configuration, an inspection tool as well as inquiries are used. Hence, there is obviated a necessity for submitting inquiries with regard to an item which can be examined through use of an inspection tool. Further, a user can ascertain an object to be selected by means of the display step. Hence, the user can select an appropriate object from displayed contents.

Preferably, the inspection tool is a program for inspecting the configuration of the information system.

The invention also provides a method for establishing a security policy on the basis of a status ascertained by the method of ascertaining the status of an information system that has been described thus far.

By means of the configuration, there is obviated a necessity for submitting inquiries with regard to an item which can be examined through use of an inspection tool. As a result, a time can be saved, thus enabling establishment of a more appropriate security policy.

The invention also provides an integration device for performing processing pertaining to an integration step in the method of ascertaining an information system, comprising:
consistency inspection means which compares a first status of the information system with a second status of the information system, thereby separating an inconsistent matter from consistent matters;
display means for displaying the inconsistent matter and enabling a user to enter a choice with regard to the inconsistent matter; and
synthesis means for merging the consistent matters with a result of choice made by the user.

Such an integration device enables execution of integration processing on the basis of a choice entered by the user.

The invention also provides a program for causing a computer to execute processing pertaining to an integration step in the method for ascertaining the status of an information system, wherein the program causes the computer to execute
processing pertaining to a consistency inspection procedure for comparing a first status of the information system with a second status of the information system, thereby separating an inconsistent matter from consistent matters;
processing pertaining to a display procedure for displaying the inconsistent matter and inputting a choice made by the user; and
processing pertaining to a synthesis procedure for merging the consistent matters with a result of choice made by the user.

The invention also provides a computer-readable recording medium in which is recorded a program for causing a computer to execute processing pertaining to an integration step in the method of ascertaining the status of an information system, wherein
the program causes the computer to execute
processing pertaining to a consistency inspection procedure for comparing a first status of the information system with a second status of the information system, thereby separating an inconsistent matter from consistent matters;
processing pertaining to a display procedure for displaying the inconsistent matter and inputting a choice made by the user; and
processing pertaining to a synthesis procedure for merging the consistent matters with a result of choice made by the user.

By means of the invention, the computer can be operated as the integration device, thereby effecting the same working-effect as that yielded by the integration device.

To solve the problem, the invention also provides a method of ascertaining the status of an information system including:
a first step of submitting inquiries to members of an organization and ascertaining the status of an information system of the organization on the basis of answers to the inquiries;
a second step of examining the status of the information system of the organization through use of an information system inspection tool, thereby ascertaining the status of the information system of the organization on the basis of a result of the inspection; and
an integration step of merging a first status of the information system and a second status of the information system, thereby establishing the status of the information system of the organization, wherein
the integration step comprises
   a consistency inspection step of comparing the first status of the information system with the second status of the information system, to thereby determine
   (1) an inconsistent matter,
   (2) consistent matters; that is, consistent matters which pertain to only the first status of the information system but not to the second status of the same, and consistent matters which pertain to only the second status of the information system but not to the first status of the same, as well as to thereby separate the inconsistent matter from the consistent matters;
   a display step of displaying the inconsistent matter and enabling a user to enter a choice with regard to the inconsistent matter; and
   a synthesis step of merging the consistent matters with a result of choice made by the user.

By means of such a configuration, an inspection tool as well as inquiries are used. Hence, there is obviated a necessity for submitting inquiries with regard to an item which can be examined through use of an inspection tool. Further, a user can ascertain an object to be selected by means of the display step. Hence, the user can select an appropriate object from displayed contents.

The invention also provides a method of establishing a security policy on the basis of a status ascertained by means of the method of ascertaining the status of an information system that has been described thus far.

By means of the configuration, there is obviated a necessity for submitting inquiries with regard to an item which can be examined through use of an inspection tool. As a result, a time can be saved. One item is inspected by an inspection tool as well as through inquiries. Hence, a more accurate information system status is obtained, and a more appropriate security policy can be established on the basis of an accurate status.

The invention also provides an integration device for performing processing pertaining to an integration step in the method of ascertaining the status of an information system that has been described thus far, comprising:
consistency inspection means for comparing the first status of the information system with the second status of the information system, to thereby determine
   (1) an inconsistent matter,
   (2) consistent matters; that is, consistent matters which pertain to only the first status of the information system but not to the second status of the same, and consistent matters which pertain to only the second status of the information system but not to the first status of the same, as well as to thereby separate the inconsistent matter from the consistent matters;
display means for displaying the inconsistent matter and enabling a user to enter a choice with regard to the inconsistent matter; and
synthesis means for merging the consistent matters with a result of choice made by the user.

By means of such an integration device, the first status of the information system and the second status of the same can be merged. In relation to an item for which inconsistencies are present, integration processing can be performed on the basis of a choice made by the user.

The invention also provides a program for causing a computer to perform processing pertaining to an integration step in the method for ascertaining the status of an information system as defined in claim 7, wherein
the program causes the computer to execute
processing pertaining to a consistency inspection procedure for comparing the first status of the information system with the second status of the information system, to thereby determine
(1) an inconsistent matter,
(2) consistent matters; that is, consistent matters which pertain to only the first status of the information system but not to the second status of the same, and consistent matters which pertain to only the second status of the information system but not to the first status of the same, as well as to thereby separate the inconsistent matter from the consistent matters;
processing pertaining to a display procedure for displaying the inconsistent matter and inputting a choice made by the user; and
processing pertaining to a synthesis procedure for merging the consistent matters with a result of choice made by the user.

The invention also provides a computer-readable recording medium in which is recorded a program for causing a computer to execute processing pertaining to an integration step in the method of ascertaining the status of an information system defined in claim 7, wherein
the program causes the computer to execute
processing pertaining to a consistency inspection procedure for comparing the first status of the information system with the second status of the information system, to thereby determine
(1) an inconsistent matter,
(2) consistent matters; that is, consistent matters which pertain to only the first status of the information system but not to the second status of the same, and consistent matters which pertain to only the second status of the information system but not to the first status of the same, as well as to thereby separate the inconsistent matter from the consistent matters;
processing pertaining to a display procedure for displaying the inconsistent matter and inputting a choice made by the user; and
processing pertaining to a synthesis procedure for merging the consistent matters with a result of choice made by the user.

By means of the inventions, the computer can activate a computer as the integration device, and hence there is yielded the same working-effect as that yielded by the integration device.

### Brief Description of the Drawings

Fig. 1 is a flowchart showing operations pertaining to a method of ascertaining the status of an information system according to a preferred embodiment of the invention;
Fig. 2 is a constitutional block diagram showing the configuration of an integration device according to the preferred embodiment of the invention;
Fig. 3 is a descriptive view showing the mode of utilization of a computer operating as an integration device;
Fig. 4 is a descriptive view showing an example status for describing an operation for merging information system statuses; and
Fig. 5 is a descriptive view showing an example of an information asset table.

### Detailed Description of Preferred Embodiments

Preferred embodiments of the invention will be described hereinbelow by reference to the accompanying drawings.

### First Embodiment

In the embodiment, there will be described a status ascertainment method for ascertaining the status of an information system of a certain organization when a security policy is to be established for the system. As described in connection with Japanese Patent Application Laid-Open No. 167345/2000, the expression "organization" employed herein signifies, in addition to enterprises, any of various legal entities, such as corporation aggregates or foundations, federal or municipal agencies, and non-profit organizations such as town associations or circles.

Ascertainment of status of the information system is required in various instances.

For instance, an invention relating to establishment of a security policy is proposed in Japanese Patent Application Laid-Open No. 167345/2000. At the time of establishment of a security policy, the status of the information system must be ascertained. In relation to Japanese Patent Application Laid-Open No. 167345/2000, the status of the information system is acquired by submitting inquiries to members of an organization.

In the present specification, there is proposed a method for determining the ultimate status of an information system of an organization, by means of merging the status of an information system acquired through submission of inquiries to the members of the organization and the status of the information system acquired through use of various tools. This method enables more quick ascertainment of status of the information system, by virtue of use of two ascertainment results; that is, a result of status ascertainment of an information system performed through use of various tools, and a result of status ascertainment of the information system effected by utilization of inquiries submitted to members of the organization.

As a matter of course, if a security policy is established on the basis of the thus-obtained ultimate status of the information system, the security policy can be established more quickly.

Various conventional approaches can be adopted as an approach for establishing a security policy. In particular, utilization of the method that has been proposed by the present inventor in Japanese Patent Application Laid-Open No. 167345/2000 is preferable.

### Basic Operation

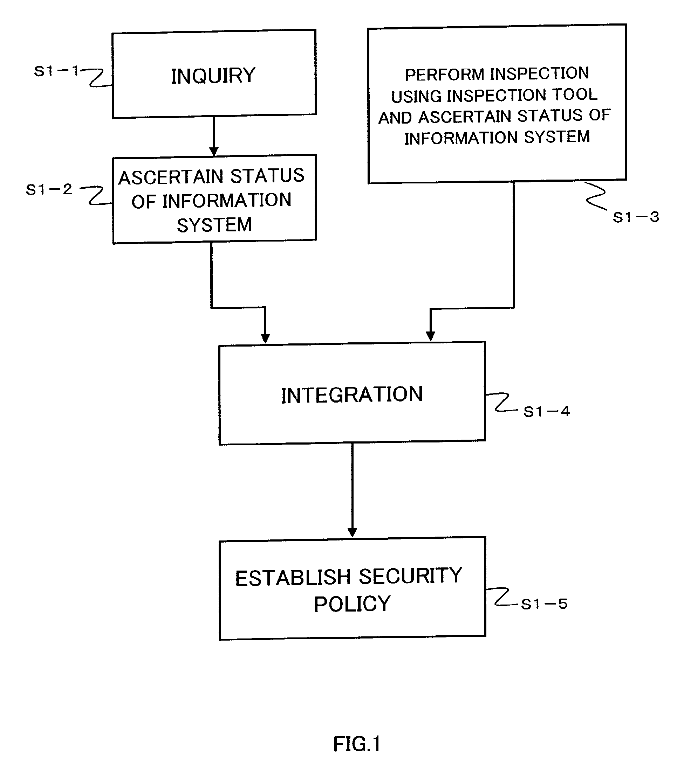

Fig. 1 shows a flowchart representing operations pertaining to a method of ascertaining the status of an information system of the embodiment.

As illustrated, in step S1-1, inquiries are submitted to members of the organization, and answers are acquired.

In step S1-2, the status of the information system is virtually established on the basis of the thus-acquired answers. As a result, the status of the information system is ascertained on the basis of the thus-acquired answers. Operations pertaining to steps S1-1 and S1-2 are the same as those performed under the method described in Japanese Patent Application Laid-Open No. 167345/2000.

In step S1-3, the information system is investigated by use of various inspection tools, such as a network analyzer. On the basis of a result of inspection, the status of the information system is ascertained.

In step S1-4, the status of the virtual information system established in step S1-2 and the status of the information system ascertained in step S1-3 are merged.

In step S1-5 a security policy is established on the basis of the status of the information system that has been merged in step S1-4. Here, the security policy to be established may be a draft. An operation pertaining to step S1-5 is identical with that performed under the method proposed in Japanese Patent Application Laid-Open No. 167345/2000.

In the embodiment, the status of the information system is grasped by utilization of inquiries and answers thereto, as well as by utilization of a result of inspection performed through use of various tools, thereby enabling more accurate ascertainment of the status of the information system.

Further, there is obviated a necessity for submitting inquiries to items which can be investigated through use of various tools, and hence time can be saved, thereby enabling prompt ascertainment of the status of an information system. Similarly, a required number of inquiries is reduced, and hence the burden to be imposed on members of the organization (i.e., the burden of providing answers to inquiries) can be diminished.

### Respective Inspection Tools

Various computer programs for ascertaining the status of the information system can be utilized as inspection tools. A program of this type has hitherto been known, and is called a security analyzer.
(1) For example, a program called a network host scanner has hitherto been known. A network host scanner usually has the following features:
   · Various devices provided on the network are searched, and a list of the found devices is output.
   · The thus-searched devices are subjected to port retrieval as to what kind of TCP/IP service is valid, and a result of retrieval is output.
   · An inspection is conducted in relation to whether or not the thus-found devices are currently operating effectively.
   · There is acquired session information as to who connects to various resources and the extent to which the resources are connected.
(2) A so-called security hole inspection tool has also known hitherto. The security hole inspection tool is a program for finding a security hole of respective devices provided on the network. The program is sometimes used for so-called system audit. In general, the security hole inspection tool is used for detecting a security hole in a WEB server, an FTP server, or a MAIL server located on the network. The program also has the function of automatically, periodically carrying out such an inspection operation.
   In addition to the program for effecting an inspection by way of a network, there is also known a program to be installed in the host which is an object of inspection. For instance, there is also known a program for conducting an inspection as to whether or not settings of a database pose no problem. This program is often called a database scanner.
(3) Use of a program called a risk analysis tool for inspection of status of an information system is also preferable.

### Integration Processing

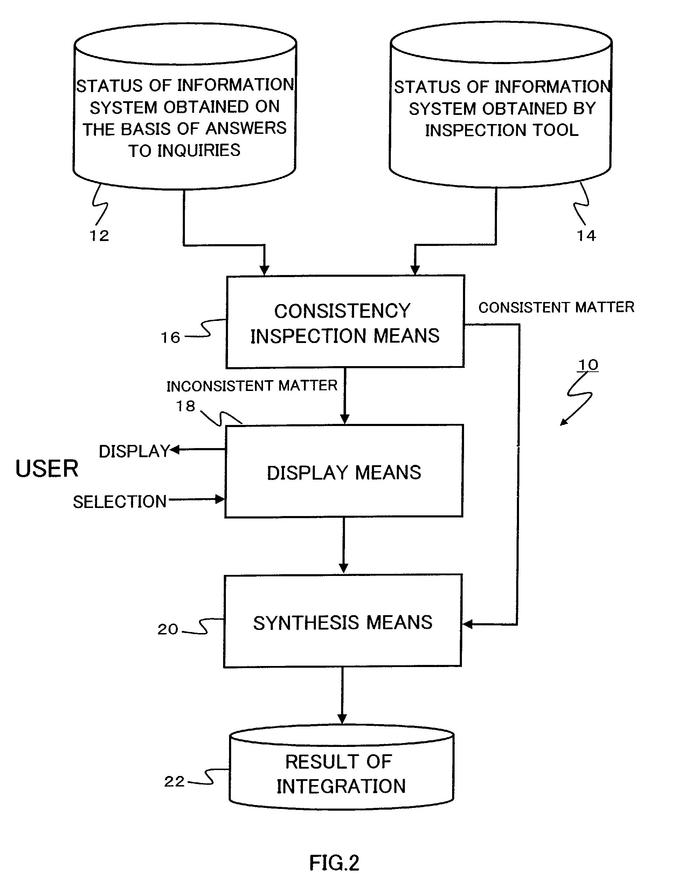

Through integration processing pertaining to step S1-4, the information system statuses grasped by the foregoing two approaches are merged. In the embodiment, integration processing is carried out by use of an integration device 10 shown in Fig. 2.

First, an information system status 12 (hereinafter referred to as a "first status 12") based on answers to inquiries, and an information system status 14 (hereinafter referred to as a "second status 14") obtained by an investigation tool are supplied to consistency inspection means 16. The consistency inspection means 16 compares the two statuses with each other, and inconsistencies are supplied to display means 18. The consistency inspection means 16 collectively stores consistencies (i.e., portions of the statuses which are determined not to be inconsistent) into an integration result 22. In this way, the consistent portions are supplied to synthesis means 20.

The display means 18 is means to be used for displaying inconsistencies to the user and for entering a choice made by the user (i.e., a selected status).

According to the embodiment, inconsistencies are displayed for the user, and hence the user can ascertain inconsistencies. In the embodiment, the user can select one of the first and second statuses 12, 14 which is correct, upon glancing at the display of the inconsistencies, and enter the thus-selected status. The display means 18 supplies the status selected by the user to the synthesis means 20.

The synthesis means 20 combines the thus-supplied statuses, thereby preparing a final information system status and the integration result 22.

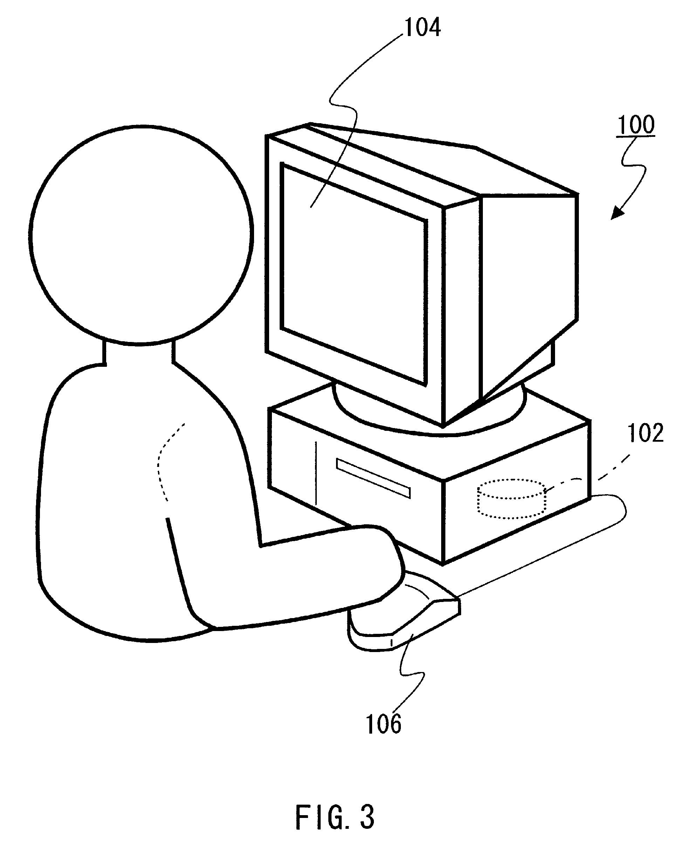

In the manner as mentioned above, the integration device 10 can merge the first status 12 and the second status 14. Preferably, the integration device 10 is constituted of a program for carrying out such an operation, and a computer which runs the program. Fig. 3 provides a descriptive view of a mode of utilization of such a computer. As illustrated, a computer 100 has internal storage means 102, and the program is stored in the storage means 102. The program causes the computer 100 to serve as the integration device 10. For example, the consistency inspection means 16, the display means 18, and the merging means 20 are embodied by use of programs which execute their operations.

In particularly, the display means 18 displays inconsistencies to the user by use of a display 104 of the computer 100. The user selects any one from the inconsistent statuses and enters the choice by way of a pointing device such as a mouse 106 of the computer 100. As a matter of course, entry of the user's choice (selected status) is also preferably carried out through use of a keyboard.

The storage means 102 corresponds to an example of a computer-readable recording medium described in claims. In addition to a hard disk drive, any type of recording medium may be employed; e.g., optical disks such as DVDs or CD-ROMs, magnetic disks, and semiconductor storage means such as flash memory, so long as the medium can store a program.

### Second Embodiment

An example of integration processing is described by reference to a specific example.

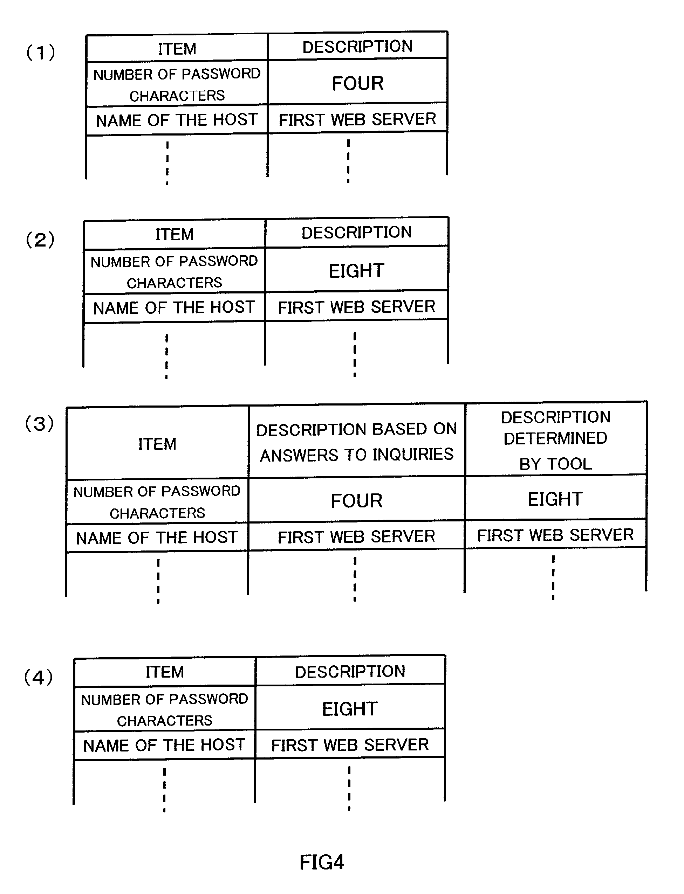

(1) Fig. 4-1 shows a table representing the status of an information system as determined from inquiries and answers thereto (i.e., a first status). Fig. 4-2 shows a table representing the status of an information system as obtained by means of various tools (i.e., a second status). Fig. 4-3 shows the tables in a single table. In the first step of integration processing, there is prepared one table in which are described a first status obtained through inquiries and a second status obtained by means of the tools. The consistency inspection means 16 of the integration device 10 performs the preparation operation.
(2) Extraction of Inconsistencies
   As shown in Fig. 4-3, "four characters" is obtained in answer to an inquiry about the "Number of Password Characters." In contrast, "eight characters" is obtained as the "Number of Password Characters" as a result of inspection performed by various tools. Consequently, the answers are inconsistent with each other. The number of Password characters can be examined by means of a tool called, e.g., a host scanner.
   As shown in Fig. 4-3, "First WEB server" is obtained in answer to an inquiry about a "Name of the Host." The "Name of the Host" obtained as a result of inspection performed by use of tools is also "First WEB server." Hence, the answers in relation to this item are consistent with each other.
   In the next step, inconsistent items are selected from the table shown in Fig. 4-3. The consistency inspection means 16 of the integration device 10 performs this selecting operation.
(3) Display of inconsistent items and entry of an instruction (choice) performed by the user in response to the display
   Next, the display means 18 displays inconsistent items to the user. The user can instruct selection of any one in connection with an inconsistent item. The display means 18 enters the instruction and supplies it to the synthesis means 20.
   For instance, the user can determine that the answerer has misunderstood and that "eight characters" examined by the tool is correct. In this case, "eight characters" is selected as the "number of password characters." If the answer provided by the answerer is determined to be incorrect in the manner set forth, making an amendment on the answer is also preferable. In other words, when the user has selected a result examined by the tool, the answerer's answer is modified so as to match the result of the examination performed according to the rule. A program is preferably constructed so as to perform such an operation.
   If the user encounters difficulty in determining which one of the results is correct, another inquiry may be submitted, in view that, there is a chance of the inconsistencies being solved by another inquiry.
(4) Synthesis Processing
   When the user has selected any one of the results, the instruction pertaining to the choice is determined to be the finally-determined status of the information system.
   In connection with the items for which no inconsistencies are found, the items are adopted as a final status of the information system. For this reason, the consistent items and the items instructed by the user must be merged. Such synthesis processing is performed by the synthesis means 20. Consequently, a result such as that shown in Fig. 4-4 is obtained. Under the status of the information system shown in Fig. 4-4, the answer obtained in response to the item for which no inconsistencies have arisen; that is, "Name of the Host," is adopted in its unmodified form. In contrast, the answer "eight characters" selected by the user is adopted as a final status in connection with the item for which inconsistencies have arisen. The results are as provided in Fig. 4-4.
   As mentioned above, according to the second embodiment, the status of the information system can be ascertained more accurately.

### Third Embodiment

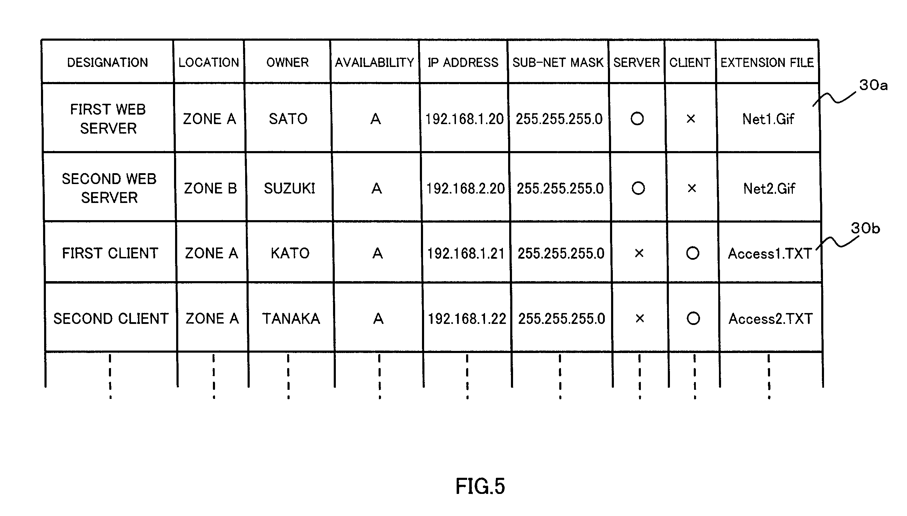

The status of the information system can be ascertained in various forms. For instance, preparation of an information asset table is one mode of ascertainment of the information system status. Here, the information asset table is a table in which details of servers and clients of the information system are described. An example information asset table is shown in Fig. 5. The table may sometimes be called an information asset database.

Storage of information about all information assets in one information asset table is not efficient. In general, a pointer 30 to be used for pointing to an external file is present in the table. In a case where an information asset is a server, indication of the location of a segment in which the server offers service in the form of an external file (designated by a reference numeral; e.g., 30a). In a case where the information asset is a client, indication of information as to an object of an access right granted to the client in the form of an external file (designated by a reference numeral; e.g., 30b) is preferable.

As mentioned, parameters to be managed change from one information asset to another information asset. With a view toward absorbing such a change, the pointer 30 to be used for indicating an external file is utilized. As a matter of course, an actual information asset table is more complicated. Here, a simple example of an information asset table is provided.

Individual fields of the table shown in Fig. 5 will now be described. Here, "Designation" indicates the name of an information asset; and "Location" means a zone or segment where the information asset is present. Here, "Owner" means a person who manages the information asset; and "Availability" indicates whether or not the information asset is available. "IP address" means a so-called "IP address"; and "Sub-net mask" means a sub-net mask. "Server" is a flag which is appended "O" when the information asset is a server and "X" when the information asset is not a server. "Client" is a flag which is appended "O" when the information asset is a flag and "X" when the information asset is not a flag. "External file" means a pointer to be used for indicating an external file representing other information.

An example in which such an information asset table is prepared as the status of an information system will be described hereinbelow.
(1) As has been described in connection with Fig. 1, inquiries are submitted to members of an organization. On the basis of answers to the inquiries, details of the information asset table described in connection with Fig. 5 can be entered to a certain extent. The thus-prepared information asset table describes the status of the information system obtained through the inquiries (i.e., a first status).

Entry of all the details of the information asset table on the basis of only inquiries and answers thereto becomes prone to involving a very large amount of work. For instance, the status of the information system relating to an IP address and a sub-net mask can be ascertained more efficiently by automatic collection using tools as compared with a case where these items are ascertained by submission of inquiries to the members of the organization.

If details of the information asset table are entered with use of tools, as well as details of the information asset table obtained on the basis of inquiries and answers thereto, the status of the information system can be ascertained more efficiently.

These operations are achieved by mere addition of the status of the information system (the second status) obtained by the tools to the status of the information system acquired through inquiries (the first status).

The configuration of a network can be generally ascertained from two aspects; that is, a physical configuration and a logical configuration.

Here, the physical configuration signifies a mere physical connection relationship, such as which zone a given server and a given client pertain to. Further, a logical configuration signifies a location connection relationship, such as which client receives service from which server.

In general, such a physical configuration can be readily inspected through use of various tools. As a result, examining "Location," "IP address," "Sub-net mask," "Server," and "Client" provided in the table shown in Fig. 5 through use of tools is efficient.

In many cases, ascertaining a logical configuration from answers to inquiries submitted to members of an organization is preferable. Consequently, ascertaining "Owner" and a file for which an access right is represented by "External file," both being provided in the table shown in Fig. 5, by way of answers to inquiries is efficient.

In this way, information about some portion of the status of the information system is obtained efficiently and accurately by means of an inspection operation using tools. In contrast, some portion of the information system status is not efficiently ascertained from answers to inquiries. Consequently, acquisition of respective information items using preferably approaches finally results in acquisition of a correct, efficient result.

The third embodiment shows an example in which the status of the information system (i.e., the second status) obtained by tools is added to the status of the information system obtained from answers to the inquiries (i.e., the first status).

The operation described thus far is preferably performed by the integration system shown in Fig. 2.

In this case, the consistency inspection means 16 handles items which pertain to only the first status and not to the second status; that is, items which are obtained from inquiries and answers thereto but not by inspection tools, as being consistent. Similarly, the consistency inspection means 16 handles items which pertain to only the second status and not to the first status; that is, items which are obtained by only inspection tools, as being consistent. Consequently, the consistent items are sent to the synthesis means 20 as they are. The synthesis means 20 simply merges received statuses, thereby preparing an information asset table such as that shown in Fig. 5.

As has been described, as a matter of course, ascertaining a single item (e.g., the number of password characters) on the basis of an answer to an inquiry while examining the same with use of tools is preferable. The reason for this is that ascertainment of a more accurate status can be expected. Operation to be performed in this case is substantially identical with that described in connection with the second embodiment. In this case, two results are obtained in connection with a single item. Hence, if the two results are inconsistent with each other, the consistency inspection means 16 extracts an inconsistent item and sends the thus-extracted item to the display means 18. The display means 18 displays inconsistencies to the user, and one selected from the inconsistencies by the user is delivered to the synthesis means 20. When two items are consistent with each other, the items are handled, in their present form, as a status which is finally ascertained.

Finally, the synthesis means 20 merges the following statuses.
· A status selected by the user in connection with an inconsistent information item which pertains to both the status selected by the user from the status obtained on the basis of answers to inquiries and the status obtained by tools.
· A consistent status pertaining to both the status selected by the user from the status obtained on the basis of answers to inquiries and the status obtained by tools.
· A status obtained from only answers to inquiries or a status obtained with use of only tools.

Among three types of statuses, the latter two types of statuses are handled as "consistent statuses" by the consistency inspection means 16, and the statuses are delivered to the synthesis means 20.

In this way, as a result of the synthesis means 20 merging these statuses, the information system status is ascertained in an efficient and accurate manner.

In the second and third embodiments, the operation of the integration device 10 has been described by reference to a specific example. However, the operation of the integration device 10 described herein is preferably implemented by a combination of the computer 100 and a program for causing the computer 100 to perform these operations. The synthesis means 20 and the consistency inspection means 16 are implemented by a program for performing operation of these means. The display means 18 is basically identical with that described in connection with the first embodiment. Such a way of utilizing a computer has already been described in connection with Fig. 3.

As has been described, according to the invention, the status of an information system ascertained through inquiries and the status of the information system ascertained through use of an inspection tool are merged. Hence, the status of the information system can be accurately ascertained within a short period of time.

According to the invention, inconsistencies of the status are displayed. Hence, a user can efficiently obtain material to be used for rendering a determination at the time of performing a selection.

To provide a method for enabling faster, accurate ascertainment of status of an information system through use of inquiries submitted to members of an organization and an approach other than the inquiries. In step S1-1, inquiries are submitted to members of an organization, and answers to the inquiries are obtained. In step S1-2 the status of the information system is ascertained on the basis of the answers. In step S1-3, the information system is examined through use of an inspection tool through use of a network analyzer, thereby ascertaining the status of the information system. In step S1-4, the status of the information system ascertained in step S1-2 and the status of the information system ascertained in step S1-3 are merged. In step S1-5, on the basis of the thus-merged status of the information system, a security policy is established. The status of the information system is ascertained by utilization of inquiries and the result of inspection performed by use of the tool. Hence, the status of the information system can be ascertained accurately.

## Claims

1. Amethod for ascertaining the status of an information system, comprising:
a first step of ascertaining a first status of an information system by submitting inquiries to members of an organization and ascertaining the status of the information system of the organization on the basis of answers to the inquiries;
a second step of ascertaining a second status of the information system by inspecting the status of the information system of the organization through use of an inspection tool of the information system and ascertaining the status of the information system on the basis of a result of the inspection; and
an integration step of merging the first information system status and the second information system status, thereby establishing the status of the information system of the organization, wherein
the integration step comprises
a consistency inspection step of comparing the first information system status with the second information system status and separating an inconsistent matter from consistent matters;
a display step of displaying the inconsistent matter and enabling entry of a choice made by the user in connection with the inconsistent matter, thereby obtaining a result selected by the user; and
a synthesis step of merging the consistent matters and the result of selection made by the user.

2. The method for ascertaining the status of an information system according to claim 1, wherein
the inspection tool is a program for inspecting the configuration of the information system.

3. A method for establishing a security policy on the basis of a status ascertained by the method of ascertaining the status of an information system according to claim 1 or 2.

4. An integration device for performing processing pertaining to an integration step in the method of ascertaining an information system according to claim 1, comprising:
consistency inspection means which compares a first status of the information system with a second status of the information system, thereby separating an inconsistent matter from consistent matters;
display means for displaying the inconsistent matter and enabling a user to enter a choice with regard to the inconsistent matter; and
synthesis means for merging the consistent matters with a result of choice made by the user.

5. A program for causing a computer to execute processing pertaining to an integration step in the method for ascertaining the status of an information system defined in claim 1, wherein the program causes the computer to execute
processing pertaining to a consistency inspection procedure for comparing a first status of the information system with a second status of the information system, thereby separating an inconsistent matter from consistent matters;
processing pertaining to a display procedure for displaying the inconsistent matter and inputting a choice made by the user; and
processing pertaining to a synthesis procedure for merging the consistent matters with a result of choice made by the user.

6. A computer-readable recording medium in which is recorded a program for causing a computer to execute processing pertaining to an integration step in the method of ascertaining the status of an information system defined in claim 1, wherein
the program causes the computer to execute
processing pertaining to a consistency inspection procedure for comparing a first status of the information system with a second status of the information system, thereby separating an inconsistent matter from consistent matters;
processing pertaining to a display procedure for displaying the inconsistent matter and inputting a choice made by the user; and
processing pertaining to a synthesis procedure for merging the consistent matters with a result of choice made by the user.

7. A method of ascertaining the status of an information system including:
a first step of submitting inquiries to members of an organization and ascertaining the status of an information system of the organization on the basis of answers to the inquiries;
a second step of examining the status of the information system of the organization through use of an information system inspection tool, thereby ascertaining the status of the information system of the organization on the basis of a result of the inspection; and
an integration step of merging a first status of the information system and a second status of the information system, thereby establishing the status of the information system of the organization, wherein
the integration step comprises
a consistency inspection step of comparing the first status of the information system with the second status of the information system, to thereby determine
(1) an inconsistent matter,
(2) consistent matters; that is, consistent matters which pertain to only the first status of the information system but not to the second status of the same, and consistent matters which pertain to only the second status of the information system but not to the first status of the same, as well as to thereby separate the inconsistent matter from the consistent matters;
a display step of displaying the inconsistent matter and enabling a user to enter a choice with regard to the inconsistent matter; and
a synthesis step of merging the consistent matters with a result of choice made by the user.

8. A method of establishing a security policy on the basis of a status ascertained by means of the method of ascertaining information system defined in claim 7.

9. An integration device for performing processing pertaining to an integration step in the method of ascertaining an information system according to claim 7, comprising:
consistency inspection means for comparing the first status of the information system with the second status of the information system, to thereby determine
(1) an inconsistent matter,
(2) consistent matters; that is, consistentmatters which pertain to only the first status of the information system but not to the second status of the same, and consistent matters which pertain to only the second status of the information system but not to the first status of the same, as well as to thereby separate the inconsistent matter from the consistent matters;
display means for displaying the inconsistent matter and enabling a user to enter a choice with regard to the inconsistent matter; and
synthesis means for merging the consistent matters with a result of choice made by the user.

10. A program for causing a computer to per form processing pertaining to an integration step in the method for ascertaining the status of an information system as defined in claim 7, wherein
the program causes the computer to execute
processing pertaining to a consistency inspection procedure for comparing the first status of the information system with the second status of the information system, to thereby determine
(1) an inconsistent matter,
(2) consistent matters; that is, consistent matters which pertain to only the first status of the information system but not to the second status of the same, and consistent matters which pertain to only the second status of the information system but not to the first status of the same, as well as to thereby separate the inconsistent matter from the consistent matters;
processing pertaining to a display procedure for displaying the inconsistent matter and inputting a choice made by the user; and
processing pertaining to a synthesis procedure for merging the consistent matters with a result of choice made by the user.

11. A computer-readable recording medium in which is recorded a program for causing a computer to execute processing pertaining to an integration step in the method of ascertaining the status of an information system defined in claim 7, wherein
the program causes the computer to execute
processing pertaining to a consistency inspection procedure for comparing the first status of the information system with the second status of the information system, to thereby determine
(1) an inconsistent matter,
(2) consistentmatters; that is, consistentmatters which pertain to only the first status of the information system but not to the second status of the same, and consistent matters which pertain to only the second status of the information system but not to the first status of the same, as well as to thereby separate the inconsistent matter from the consistent matters;
processing pertaining to a display procedure for displaying the inconsistent matter and inputting a choice made by the user; and
processing pertaining to a synthesis procedure for merging the consistent matters with a result of choice made by the user.
